# EUROPEAN PATENT SPECIFICATION

(11) **EP 2 521 030 B1**
(45) Date of publication and mention of the grant of the patent: **16.01.2019**
(21) Application number: 10840355.1
(22) Date of filing: 13.05.2010
(51) Int. Cl.: G06F 9/445

(54) **INTELLIGENT DATA TERMINAL AND APPLICATION METHOD THEREOF**
INTELLIGENTES DATENENDGERÄT UND ANWENDUNGSVERFAHREN DAFÜR
TERMINAL DE DONNÉES INTELLIGENT ET SON PROCÉDÉ D'APPLICATION

(30) Priority: 31.12.2009 CN 200910215788
(43) Date of publication of application: 07.11.2012
(73) Proprietor: ZTE Corporation, Shenzhen, Guangdong 518057 (CN)
(72) Inventor: LIU, Chao, Guangdong 518057 (CN)
(74) Representative: Novagraaf Technologies
(86) International application number: PCT/CN2010/072705
(87) International publication number: WO 2011/079565

(56) References cited:
- CN-A- 101 075 178
- CN-A- 101 110 039
- CN-A- 101 110 039
- CN-Y- 2 786 871
- US-A1- 2005 249 179

## Description

### Field of the Invention

The present invention relates to the field of mobile communication, in particular to an intelligent data terminal and an application method of an intelligent data terminal.

### Background of the Invention

With acceleration of work and life rhythm and frequent transformation of office locations and addresses, user demand for wireless Internet access service becomes more and more intense, so that a product, namely a wireless Internet access data terminal, aiming at the demand is arisen.

However, in a current data terminal, defects of long starting and initializing time, abnormal disconnection, inconvenience of acquiring data traffic generated by surfing the Internet and the like can be caused. These defects can be improved by the optimization of the data terminal per se. The conception of the intelligent data terminal provided by this specification is to optimize some detailed problems of the data terminal during a using process, so that automation, high efficiency and humanization of a product can be achieved to the most extent, and very little user intervention is required so as to enhance the satisfaction of the user.

### Summary of the Invention

The present invention provides an intelligent data terminal and an application method of an intelligent data terminal, so that auto-dial-up for Internet access (auto-dial-up and networking) of a computer is realized by auto-installation and auto-starting.

In addition, the present invention also can realize functions of automatically upgrading software and automatically monitoring data traffic generated by surfing the Internet.

The present invention provides an application method of an intelligent data terminal, wherein the data terminal at least comprises a software main program, an auto-installation module, an auto-starting module and an auto-dial-up and networking module so as to perform the following steps of:
the software main program triggering running of the auto-installation module so as to establish running conditions of all other modules;
then, the auto-installation module or the software main program triggering running of the auto-starting module; and
later on, the auto-starting module triggering running of the auto-dial-up and networking module.

In the above, when the software main program detects that a PC-side software and a driver of the data terminal are not installed in a computer coupled with the software main program, the auto-installation module is triggered to automatically run an installation program of the driver and the PC-side software; and
when the auto-installation module finishes the auto-installation, the auto-starting module is triggered to start the PC-side software installed in the computer.

In the above, when the software main program detects that a PC-side software and a driver of the data terminal are installed in a computer coupled with the software main program again, the auto-starting module is triggered to start the PC-side software installed in the computer.

In the above, when the auto-starting module starts the PC-side software, the auto-dial-up and networking module is triggered to perform operations of automatically dialling up and networking.

In the above, the data terminal also comprises an automatic networking traffic monitoring module; and after the operations of automatically dialling up and networking is performed successfully, the automatic networking traffic monitoring module resides in the software main program to monitor a networking data traffic in real time.

In the above, when the automatic networking traffic monitoring module monitors that the networking data traffic reaches or gets close to a networking data traffic threshold preset by the user, notifies the software main program; and the software main program notifies the user in a form of a message.

In the above, the data terminal also comprises an automatic software upgrading module; after automatically dialling up and networking successfully, the automatic software upgrading module resides in the software main program, and notifies the software main program when detecting a latest version; and the software main program enters a software updating and upgrading procedure.

In the above, the PC-side software is a tool software comprising a dialling-up and networking tool; and the auto-dial-up and networking module performs the operations of automatically dialling up and networking by starting the dialling-up and networking tool.

The present invention also provides an intelligent data terminal, comprising a software main program, an auto-installation module, an auto-starting module and an auto-dial-up and networking module, wherein
the software main program is used for triggering the auto-installation module or the auto-starting module;
the auto-installation module is used for performing an auto-installation function after receiving triggering information of the software main program, and triggering the auto-starting module after finishing the operation;
the auto-starting module is used for performing an auto-starting operation after receiving triggering information of the auto-installation module or the software main program, and triggering the auto-dial-up and networking module after finishing the auto-starting operation; and
the auto-dial-up and networking module is used for performing operations of automatically dialling up and networking after receiving triggering information of the auto-starting module.

In the above, the data terminal also comprises:
an automatic networking traffic monitoring module, used for performing an operation of monitoring networking data traffic after receiving triggering information of the auto-dial-up and networking module, and notifying the software main program when detecting that the networking data traffic reaches or gets close to a networking data traffic threshold preset by a user; and/or,
an automatic software upgrading module, used for detecting a software version after receiving triggering information of the auto-dial-up and networking module, and notifying the software main program when a latest version is detected;
the auto-dial-up and networking module is also used for triggering the automatic networking traffic monitoring module and/or the automatic software upgrading module after finishing the operations of automatically dialling up and networking.

The invention is defined by the independent claims.

The present invention has the following technical effects that:
1. the PC-side software and the driver of the data terminal can be installed in the computer automatically, simply and rapidly, and the user does not need to have professional knowledge background;
2. the PC-side software installed in the computer can be automatically started, so that the operation steps of the user are reduced;
3. the operations of dialling up and networking are performed automatically, so that the operations of the user are simplified and time is saved;
4. if the latest version is issued, updating can be performed automatically in the permission of the user so as to realize automatic upgrading; and
5. the networking data traffic is monitored automatically, namely when the networking data traffic reaches, or gets close to the threshold, a data card can remind the user, so that economic loss caused by the carelessness of the user is avoided.

### Brief Description of the Drawings

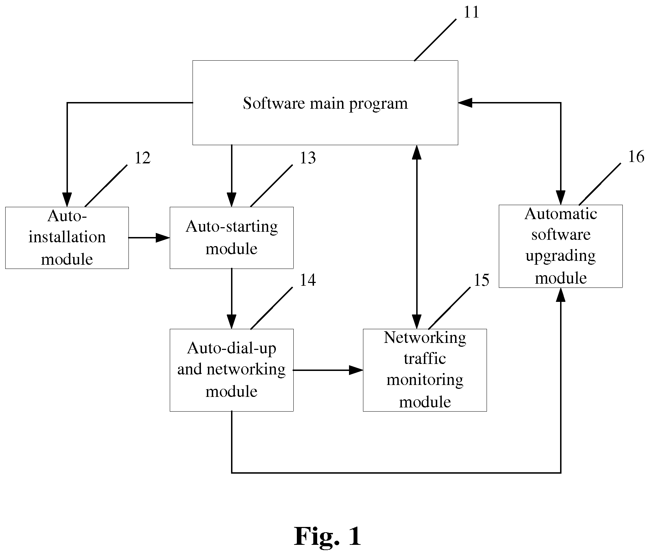

Fig. 1 shows a schematic diagram of relationship among all functional modules of an intelligent data terminal in accordance with an embodiment of the present invention.

### Detailed Description of the Embodiments

The technical solution of embodiments of the present invention is described below with reference to the accompanying drawings in detail.

Fig. 1 shows the relationship among all functional modules of the intelligent data terminal in accordance with an embodiment of the present invention. As shown in Fig. 1, the intelligent data terminal in accordance with an embodiment of the present invention comprises: a software main program 11, an auto-installation module 12, an auto-starting module 13 and an auto-dial-up and networking module14, wherein
the software main program 11 is used for triggering the auto-installation module 12;
the auto-installation module 12 is used for performing an auto-installation function after receiving triggering information of the software main program 11, and triggering the auto-starting module 13 after finishing the operation;
the auto-starting module 13 is used for performing an auto-starting operation after receiving triggering information of the auto-installation module 12, and triggering the auto-dial-up and networking module 14 after finishing the auto-starting operation; and
the auto-dial-up and networking module 14 is used for performing operations of automatically dialling up and networking after receiving triggering information of the auto-starting module 13.

The software main program 11 is also used for triggering the auto-installation module 12;
the auto-installation module 12 is also used for performing the auto-starting operation after receiving triggering information of the software main program 11, and triggering the auto-dial-up and networking module 14 after finishing the auto-starting operation;
the auto-dial-up and networking module 14 is also used for triggering an automatic networking traffic monitoring module 15 after finishing the operations of automatically dialling up and networking;
the intelligent data terminal can also comprise: the automatic networking traffic monitoring module 15, used for performing an operation of monitoring the networking traffic after receiving triggering information of the auto-dial-up and networking module 14, and notifying the software main program 11 when detecting that the networking data traffic reaches or gets close to a networking data traffic threshold preset by a user;
the software main program 11 is also used for notifying the user in a form of a message after receiving the notification sent by the automatic networking traffic monitoring module 15;
the auto-dial-up and networking module 14 is also used for triggering an automatic software upgrading module 16 after finishing the operations of automatically dialling up and networking;
the intelligent data terminal can also comprise: the automatic software upgrading module 16, used for detecting a software version after receiving triggering information of the auto-dial-up and networking module 14, and notifying the software main program 11 when detecting a latest version; and
the software main program 11 is also used for entering a software updating and upgrading procedure after receiving the notification of the automatic software upgrading module 16.

The five modules, the auto-installation module 12, the auto-starting module 13, the auto-dial-up and networking module 14, the automatic networking traffic monitoring module 15 and the automatic software upgrading module 16 belong to the software main program 11 of the data terminal, and are controlled and coordinated by the software main program 11 uniformly. Simultaneously, these five modules have certain interaction among them.

A triggering condition of the auto-installation is that the data terminal is used for the first time. When the software main program detects this condition, the auto-installation is performed. In addition, the auto-installation is a precondition for running the other four modules.

The triggering condition of the auto-starting is that the data terminal, besides being used for the first time, is re-inserted into a Universal Serial Bus (USB) interface of the computer and driven by the main program. Moreover, the auto-starting is also a precondition of the auto-dial-up and networking, automatic networking traffic monitoring, and automatic software upgrading.

The auto-dial-up and networking is triggered and performed after the auto-starting is completed, and can bear various types of main service of the data card after being triggered and performed successfully. The auto-dial-up and networking is a precondition of the automatic networking traffic monitoring and the automatic software upgrading.

The automatic networking traffic monitoring is controlled by the software main program of the data card, and resides in the main program after the success of the auto-dial-up and networking. When the networking traffic reaches a preset condition, the automatic networking traffic monitoring can notify the main program, and then the software main program feeds back to the user in a form of a message.

The automatic software upgrading also resides in the main program after the success of the auto-dial-up and networking. When a new version needing to be updated is detected, the automatic software updating can notify the main program so that the main program enters a software updating and upgrading procedure.

Taking a USB equipment of wireless Internet access of the computer as an example, the implementation method of the intelligent data terminal in accordance with an embodiment of the present invention comprises the steps as follows.

A software main program 11 triggers running of an auto-installation module 12 so as to establish running conditions of all other modules. That is to say, only when the auto-installation module 12 is run, and a driver and a PC-side software are installed in the computer, the other modules can be run.

Then, the auto-installation module 12 and the software main program 11 triggers running of an auto-starting module 13, so that the computer starts the PC-side software installed on a PC side.

Later on, the auto-starting module 13 triggers running of an auto-dial-up and networking module 14, so that the computer can access the Internet automatically.

Specifically, when the software main program 11 detects that the PC-side software and the driver of the data card are not installed in the computer coupled with the software main program 11, the auto-installation module 12 is triggered to run an installing program of the driver and the CP-side software automatically. The situation generally occurs when the intelligent data terminal is inserted into the USB interface of the computer for the first time. The software main program 11 can automatically perform the detection related to the PC-side software and the driver of the intelligent data terminal, when no response is received, the software main program 11 determines that the PC-side software and the driver of the data terminal are not installed in the computer, and then triggers the auto-installation module 12 to perform the operation of auto-installation.

After finishing the auto-installation, the auto-installation module 12 can directly trigger the auto-starting module 13 to start the PC-side software installed in the computer so as to perform operations according to corresponding commands.

The intelligent data terminal is a plug-and-play device. When the computer is started again, or when the intelligent data terminal is re-inserted into the USB interface of the computer, the software main program 11 detects that the PC-side software and the driver of the data card are installed in the computer coupled with the software main program 11 again, so as to trigger the auto-starting module 13 to start the PC-side software installed in the computer instead of triggering the auto-installation module 12.

After the auto-starting module 13 starts the PC-side software, the auto-dial-up and networking module 14 is triggered to perform the operations of the automatic dialling up and networking. Because the PC-side software is a tool software comprising a dialling-up and networking tool, the auto-dial-up and networking module 14 performs the operations of automatically dialling up and networking by starting the dialling-up and networking tool. In addition, when the operations of dialling up and networking are performed, the networking tool can automatically open a web page address preset by the user.

The operations of dialling up and networking are specifically as follows:
the PC-side software automatically dials up and accesses the Internet according to a default network configuration, and can automatically open a web page address preset by the user, therefore, the operation of the user can be simplified so as to save time.

After the operations of dialling up and networking are finished, various types of main service of the data terminal can be borne.

In the networking process of the user, if abnormal disconnection happens, the intelligent data terminal can automatically re-dial-up and access the Internet, so that the user can surf the Internet again within the shortest time.

After automatically dialling up and networking successfully, the auto-dial-up and networking module 14 also can trigger the start of the automatic networking traffic monitoring module 15, so that the automatic networking traffic monitoring module 15 resides in the software main program 11 to monitor the data traffic of surfing, through the computer, the Internet in real time.

The operation of automatically monitoring the networking traffic is specifically as follows:
the user can preset a networking data traffic threshold; when the networking traffic monitoring module 15 monitors that the networking data traffic reaches or gets close to the networking data traffic threshold preset by the user, the networking traffic monitoring module 15 notifies the software main program 11; and after receiving the notification, the software main program 11 notifies the user in the form of a message.

After automatically dialling up and networking successfully, the auto-dial-up and networking module 14 also can trigger the start of the software upgrading module 16, so that the software upgrading module resides in the software main program 11 to automatically notify the software main program 11 when the latest version is detected; after receiving the notification, the software main program 11 enters the software updating and upgrading procedure so as to update programs such as the driver, the PC-side software and the like.

By utilizing the method of the present invention, the following effects can be achieved:
1. auto-installation
   the auto-installation is that when the data terminal is used for the first time by the user and after the data terminal is inserted into the USB interface of the computer, the data terminal can automatically run the installation program of the driver and the PC-side software; the user can finish the installation easily, simply and rapidly by only clicking a mouse for several times without any need of professional knowledge background;
2. auto-starting
   the premise of the auto-starting is that the PC-side software and the driver of the data terminal are correctly installed on the computer; after the data terminal is inserted into the USB interface of the computer by the user, the data terminal determines automatically, the PC-side software is started instead of starting the installation program so that the operation steps of the user are reduced;
3. auto-dial-up and networking
   the auto-networking comprises the contents in two aspects, firstly, after the PC-side software of the data terminal is run, the PC-side software can automatically dial up and access the Internet and automatically open the wed page address preset by the user without manually performing the operations of dialling up and networking by the user, so that the operation of the user is simplified and time is saved; and secondly, during the process of surfing the Internet by the user, if abnormal disconnection occurs, the data terminal can automatically re-dial-up and access the Internet, so that the user can surf the Internet again within the shortest time;
4. auto-upgrading
   the automatic software upgrading is that the data terminal can detect the information on the network periodically, if the latest version is issued, the updating can be automatically performed in the admission of the user, the updated contents comprising the driver, the PC-side software, new software skin and the like, so that the user can feel the surprise brought by new contents and troubles in manually upgrading or going to a service network to upgrade are voided; and
5. automatic networking traffic monitoring
   the user needs to preset a networking data traffic threshold; the data card can monitor automatically, when the networking data traffic of the user reaches or gets close to the threshold, the data card can remind the user, so that the economic loss caused by the carelessness of the user is avoided.

Although the present invention is described in detail by the above, but the present invention is not limited to the above. Those skilled in the art can perform various modifications according to the principle of the present invention. Therefore, the modifications made according to the principle of the present invention shall fall within the scope of protection of the present invention.

## Claims

1. An application method for an intelligent data terminal, the intelligent data terminal comprising a software main program (11), an auto-installation module (12), an auto-starting module (13) and an auto-dial-up and networking module (14), and the data terminal performs operations of:
the software main program (11) triggering running of the auto-installation module (12), and establishing running conditions of all other modules;
the auto-installation module (12) or the software main program (11) triggering running of the auto-starting module; and
the auto-starting module (13) triggering running of the auto-dial-up and networking module (14),
wherein the data terminal further comprises an automatic networking traffic monitoring module, wherein when the automatic networking traffic monitoring module monitors that the networking data traffic reaches a networking data traffic threshold preset by a user, the automatic networking traffic monitoring module notifies the software main program (11).

2. The method according to claim 1, **characterized in that** when the software main program (11) detects that a PC-side software and a driver of the data terminal are not installed in a computer coupled with the software main program (11), the auto-installation module (12) is triggered to run an installation program of the driver and the PC-side software automatically; and
when the auto-installation module (12) finishes auto-installation, the auto-starting module (13) is triggered to start the PC-side software installed in the computer.

3. The method according to claim 1, **characterized in that** when the software main program (11) detects that a PC-side software and a driver of the data terminal are installed in a computer coupled with the software main program (11) again, the auto-starting module (13) is triggered to start the PC-side software installed in the computer.

4. The method according to claim 2 or 3, **characterized in that** after the auto-starting module (13) starts the PC-side software, the auto-dial-up and networking module (14) is triggered to perform operations of automatically dialling up and networking.

5. The method according to claim 4, **characterized in that** after the operations of automatically dialling up and networking is performed successfully, the automatic networking traffic monitoring module resides in the software main program (11) to monitor networking data traffic in real time.

6. The method according to claim 5, **characterized in that** the software main program (11) notifies the user in a form of a message.

7. The method according to claim 4, **characterized in that** the data terminal further comprises an automatic software updating module; after the operations of automatically dialling up and networking is performed successfully, the automatic software upgrading module resides in the software main program (11), and automatically notifies the software main program (11) when detecting a latest version; and the software main program (11) enters a software updating and upgrading procedure.

8. The method according to claim 4, **characterized in that** the PC-side software is a tool software comprising a dialling-up and networking tool; and the auto-dial-up and networking module (14) performs the operations of automatically dialling up and networking by starting the dialling-up and networking tool.

9. An intelligent data terminal, comprising a software main program (11), an auto-installation module (12), an auto-starting module (13) and an auto-dial-up and networking module (14), wherein
the software main program (11) is used for triggering the auto-installation module (12) or the auto-starting module;
the auto-installation module (12) is used for performing an auto-installation function after receiving triggering information of the software main program (11), and triggering the auto-starting module (13) after finishing the operation;
the auto-starting module (13) is used for performing an auto-starting operation after receiving triggering information of the auto-installation module (12) or the software main program (11), and triggering the auto-dial-up and networking module (14) after finishing the auto-starting operation; and
the auto-dial-up and networking module (14) is used for performing operations of automatically dialling up and networking after receiving triggering information of the auto-starting module,
wherein the data terminal further comprises an automatic networking traffic monitoring module (15), used for performing an operation of monitoring networking data traffic after receiving triggering information of the auto-dial-up and networking module (14), and notifying the software main program (11) when detecting that the networking data traffic reaches a networking data traffic threshold preset by a user.

10. The data terminal according to claim 9, **characterized in that**
the data terminal further comprises: an automatic software upgrading module (16), used for detecting a software version after receiving triggering information of the auto-dial-up and networking module (14), and notifying the software main program (11) when a latest version is detected;
the auto-dial-up and networking module (14) is further used for triggering the automatic networking traffic monitoring module and/or the automatic software upgrading module after finishing the operations of automatically dialling up and networking.

## Patentansprüche

1. Anwendungsverfahren für ein intelligentes Datenendgerät, wobei das intelligente Datenendgerät ein Software-Hauptprogramm (11), ein Autoinstallationsmodul (12), ein Autostartmodul (13) und ein Autoeinwahl- und Netzwerkmodul (14) umfasst, und das Datenendgerät Vorgänge durchführt des:
Triggerns, durch das Software-Hauptprogramm (11), des Ausführens des Autoinstallationsmoduls (12), und Herstellens von Ausführungsbedingungen aller anderen Module;
Triggerns, durch das Autoinstallationsmodul (12) oder das Software-Hauptprogramm (11), des Ausführens des Autostartmoduls; und
Triggerns, durch das Autostartmodul (13), des Ausführens des Autoeinwahl- und Netzwerkmoduls (14),
wobei das Datenendgerät weiter ein automatisches Netzwerkverkehrsüberwachungsmodul umfasst, wobei wenn das automatische Netzwerkverkehrsüberwachungsmodul beobachtet, dass der Netzwerkdatenverkehr einen von einem Benutzer voreingestellten Netzwerkdatenverkehrsschwellenwert erreicht, das automatische Netzwerkverkehrsüberwachungsmodul das Software-Hauptprogramm (11) benachrichtigt.

2. Verfahren nach Anspruch 1, **dadurch gekennzeichnet, dass** wenn das Software-Hauptprogramm (11) erkennt, dass eine PC-seitige Software und ein Treiber des Datenendgeräts nicht in einem Computer installiert sind, der mit dem Software-Hauptprogramm (11) gekoppelt wird, das Autoinstallationsmodul (12) dazu getriggert wird, automatisch ein Installationsprogramm des Treibers und der PC-seitigen Software auszuführen; und
wenn das Autoinstallationsmodul (12) die Autoinstallation abschließt, das Autostartmodul (13) dazu getriggert wird, die im Computer installierte PC-seitige Software zu starten.

3. Verfahren nach Anspruch 1, **dadurch gekennzeichnet, dass** wenn das Software-Hauptprogramm (11) erkennt, dass eine PC-seitige Software und ein Treiber des Datenendgeräts in einem Computer installiert sind, der erneut mit dem Software-Hauptprogramm (11) gekoppelt wird, das Autostartmodul (13) dazu getriggert wird, die im Computer installierte PC-seitige Software zu starten.

4. Verfahren nach Anspruch 2 oder 3, **dadurch gekennzeichnet, dass** nachdem das Autostartmodul (13) die PC-seitige Software startet, das Autoeinwahl- und Netzwerkmodul (14) dazu getriggert wird, Vorgänge des automatischen Einwählens und Vernetzens durchzuführen.

5. Verfahren nach Anspruch 4, **dadurch gekennzeichnet, dass** nachdem die Vorgänge des automatischen Einwählens und Vernetzens erfolgreich durchgeführt wurden, das automatische Netzwerkverkehrsüberwachungsmodul im Software-Hauptprogramm (11) residiert, um Netzwerkdatenverkehr in Echtzeit zu überwachen.

6. Verfahren nach Anspruch 5, **dadurch gekennzeichnet, dass** das Software-Hauptprogramm (11) den Benutzer in einer Form einer Nachricht benachrichtigt.

7. Verfahren nach Anspruch 4, **dadurch gekennzeichnet, dass** das Datenendgerät weiter ein automatisches Software-Updatemodul umfasst; nachdem die Vorgänge des automatischen Einwählens und Vernetzens erfolgreich durchgeführt wurden, das automatische Software-Upgrademodul im Software-Hauptprogramm (11) residiert, und automatisch das Software-Hauptprogramm (11) benachrichtigt, wenn es eine neueste Version erkennt; und das Software-Hauptprogramm (11) eine Software-Update- und Upgradeprozedur einleitet.

8. Verfahren nach Anspruch 4, **dadurch gekennzeichnet, dass** die PC-seitige Software eine Tool-Software ist, die ein Einwahl- und Netzwerktool umfasst; und das Autoeinwahl- und Netzwerkmodul (14) die Vorgänge des automatischen Einwählens und Vernetzens durch Starten des Einwahl- und Netzwerktool durchführt.

9. Intelligentes Datenendgerät, das ein Software-Hauptprogramm (11), ein Autoinstallationsmodul (12), ein Autostartmodul (13) und ein Autoeinwahl- und Netzwerkmodul (14) umfasst, wobei
das Software-Hauptprogramm (11) dafür verwendet wird, das Autoinstallationsmodul (12) oder das Autostartmodul zu triggern;
das Autoinstallationsmodul (12) dafür verwendet wird, nach Empfangen von Triggerinformationen des Software-Hauptprogramms (11) eine Autoinstallationsfunktion durchzuführen, und nach Abschließen des Vorgangs das Autostartmodul (13) zu triggern;
das Autostartmodul (13) dafür verwendet wird, nach Empfangen von Triggerinformationen des Autoinstallationsmoduls (12) oder des Software-Hauptprogramms (11) einen Autostartvorgang durchzuführen, und nach Abschließen des Autostartvorgangs das Autoeinwahl- und Netzwerkmodul (14) zu triggern; und
das Autoeinwahl- und Netzwerkmodul (14) dafür verwendet wird, nach Empfangen von Triggerinformationen des Autostartmoduls Vorgänge des automatischen Einwählens und Vernetzens durchzuführen,
wobei das Datenendgerät weiter ein automatisches Netzwerkverkehrsüberwachungsmodul (15) umfasst, das dafür verwendet wird, nach Empfangen von Triggerinformationen des Autoeinwahl- und Netzwerkmoduls (14) einen Vorgang des Überwachens von Netzwerkdatenverkehr durchzuführen, und das Software-Hauptprogramm (11) zu benachrichtigen, wenn es erkennt, dass der Netzwerkdatenverkehr einen von einem Benutzer voreingestellten Netzwerkdatenverkehrsschwellenwert erreicht.

10. Datenendgerät nach Anspruch 9, **dadurch gekennzeichnet, dass** das Datenendgerät weiter umfasst:
ein automatisches Software-Upgrademodul (16), das dafür verwendet wird, nach Empfangen von Triggerinformationen des Autoeinwahl- und Netzwerkmoduls (14) eine Softwareversion zu erkennen, und das Software-Hauptprogramm (11) zu benachrichtigen, wenn eine neueste Version erkannt wird;
das Autoeinwahl- und Netzwerkmodul (14) weiter dafür verwendet wird, nach Abschließen der Vorgänge des automatischen Einwählens und Vernetzens das automatische Netzwerkverkehrsüberwachungsmodul und/oder das automatische Software-Upgrademodul zu triggern.

## Revendications

1. Procédé d'application pour un terminal de données intelligentes, le terminal de données intelligentes comprenant un programme principal logiciel (11), un module d'auto-installation (12), un module de démarrage automatique (13) et un module de composition automatique et de mise en réseau (14), et le terminal de données réalise des opérations de :
déclenchement de l'exécution du module d'auto-installation (12), et établissement de conditions d'exécution de tous les autres modules, par le programme principal logiciel (11) ;
déclenchement par le module d'auto-installation (12) ou le programme principal logiciel (11) de l'exécution du module de démarrage automatique ; et
déclenchement par le module de démarrage automatique (13) de l'exécution du module de composition automatique et de mise en réseau (14),
dans lequel le terminal de données comprend en outre un module de surveillance de trafic de mise en réseau automatique, dans lequel lorsque le module de surveillance de trafic de mise en réseau automatique surveille que le trafic de données de mise en réseau atteint un seuil de trafic de données de mise en réseau préétabli par un utilisateur, le module de surveillance de trafic de mise en réseau automatique avertit le programme principal logiciel (11).

2. Procédé selon la revendication 1, **caractérisé en ce que** lorsque le programme principal logiciel (11) détecte qu'un logiciel côté PC et un pilote du terminal de données ne sont pas installés dans un ordinateur couplé au programme principal logiciel (11), le module d'auto-installation (12) est déclenché pour exécuter automatiquement un programme d'installation du pilote et du logiciel côté PC ; et
lorsque le module d'auto-installation (12) finit l'auto-installation, le module de démarrage automatique (13) est déclenché pour démarrer le logiciel côté PC installé dans l'ordinateur.

3. Procédé selon la revendication 1, **caractérisé en ce que** lorsque le programme principal logiciel (11) détecte à nouveau qu'un logiciel côté PC et un pilote du terminal de données sont installés dans un ordinateur couplé au programme principal logiciel (11), le module de démarrage automatique (13) est déclenché pour démarrer le logiciel côté PC installé dans l'ordinateur.

4. Procédé selon la revendication 2 ou 3, **caractérisé en ce que**, après que le module de démarrage automatique (13) démarre le logiciel côté PC, le module de composition automatique et de mise en réseau (14) est déclenché pour réaliser des opérations de composition automatique et de mise en réseau.

5. Procédé selon la revendication 4, **caractérisé en ce que**, après que les opérations de composition automatique et de mise en réseau sont réalisées avec succès, le module de surveillance de trafic de mise en réseau automatique réside dans le programme principal logiciel (11) pour surveiller un trafic de données de mise en réseau en temps réel.

6. Procédé selon la revendication 5, **caractérisé en ce que** le programme principal logiciel (11) avertit l'utilisateur sous forme d'un message.

7. Procédé selon la revendication 4, **caractérisé en ce que** le terminal de données comprend en outre un module de mise à jour de logiciel automatique ; après que les opérations de composition automatique et de mise en réseau sont réalisées avec succès, le module de mise à niveau de logiciel automatique réside dans le programme principal logiciel (11), et avertit automatiquement le programme principal logiciel (11) lorsqu'il détecte une version la plus récente ; et le programme principal logiciel (11) entre dans une procédure de mise à jour et de mise à niveau de logiciel.

8. Procédé selon la revendication 4, **caractérisé en ce que** le logiciel côté PC est un logiciel outil comprenant un outil de composition et de mise en réseau ; et le module de composition automatique et de mise en réseau (14) réalise les opérations de composition automatique et de mise en réseau en démarrant l'outil de composition et de mise en réseau.

9. Terminal de données intelligentes, comprenant un programme principal logiciel (11), un module d'auto-installation (12), un module de démarrage automatique (13) et un module de composition automatique et de mise en réseau (14), dans lequel
le programme principal logiciel (11) est utilisé pour déclencher le module d'auto-installation (12) ou le module de démarrage automatique ;
le module d'auto-installation (12) est utilisé pour réaliser une fonction d'auto-installation après réception d'informations de déclenchement du programme principal logiciel (11), et pour déclencher le module de démarrage automatique (13) après avoir fini l'opération ;
le module de démarrage automatique (13) est utilisé pour réaliser une opération de démarrage automatique après réception d'informations de déclenchement du module d'auto-installation (12) ou du programme principal logiciel (11), et pour déclencher le module de composition automatique et de mise en réseau (14) après avoir fini l'opération de démarrage automatique ; et
le module de composition automatique et de mise en réseau (14) est utilisé pour réaliser des opérations de composition automatique et de mise en réseau après réception d'informations de déclenchement du module de démarrage automatique,
dans lequel le terminal de données comprend en outre un module de surveillance de trafic de mise en réseau automatique (15), utilisé pour réaliser une opération de surveillance de trafic de données de mise en réseau après réception d'informations de déclenchement du module de composition automatique et de mise en réseau (14), et pour avertir le programme principal logiciel (11) lorsqu'il détecte que le trafic de données de mise en réseau atteint un seuil de trafic de données de mise en réseau préétabli par un utilisateur.

10. Terminal de données selon la revendication 9, **caractérisé en ce que**
le terminal de données comprend en outre : un module de mise à niveau de logiciel automatique (16), utilisé pour détecter une version logicielle après réception d'informations de déclenchement du module de composition automatique et de mise en réseau (14), et pour avertir le programme principal logiciel (11) lorsqu'une version la plus récente est détectée ;
le module de composition automatique et de mise en réseau (14) est en outre utilisé pour déclencher le module de surveillance de trafic de mise en réseau automatique et/ou le module de mise à niveau de logiciel automatique après avoir fini les opérations de composition automatique et de mise en réseau.
